# EUROPÄISCHE PATENTSCHRIFT

(11) **EP 3 392 551 B1**
(45) Veröffentlichungstag und Bekanntmachung des Hinweises auf die Patenterteilung: **25.12.2019**
(21) Anmeldenummer: 18168225.3
(22) Anmeldetag: 19.04.2018
(51) Int. Cl.: F21S 4/20, F21V 8/00, G09F 13/18

(54) **BELEUCHTUNGSMODUL**
LIGHTING MODULE
MODULE D'ÉCLAIRAGE

(30) Priorität: 19.04.2017 DE 102017108274
(43) Veröffentlichungstag der Anmeldung: 24.10.2018
(73) Patentinhaber: TRILUX GmbH & Co. KG, 59759 Arnsberg (DE)
(72) Erfinder: Niggemann, Dipl.-Ing. Rudolf, 59759 Arnsberg (DE); Drölle, Alexander, 59846 Sundern (DE)
(74) Vertreter: Lippert Stachow Patentanwälte Rechtsanwälte

(56) Entgegenhaltungen:
- EP-A1- 2 101 309
- WO-A1-2010/095156
- CN-U- 202 182 401
- DE-A1-102010 062 185
- US-A1- 2007 147 034
- US-A1- 2013 021 790

## Beschreibung

Die Erfindung betrifft ein Beleuchtungsmodul zur Gestaltung einer Beleuchtungseinrichtung.

Derartige Beleuchtungsmodule sind insbesondere auf dem Gebiet der LED-Beleuchtungssysteme bekannt, beispielsweise bei solchen Anwendungen, bei welchen lichtabgebende Leuchtflächen flexibel und an die jeweiligen Gegebenheiten anpassbar sind. Ein wesentlicher Aspekt derartiger Beleuchtungseinrichtungen ist die Bereitstellung eines oder mehrerer derartiger Beleuchtungsmodule, deren Bauelemente einfach herstellbar sind und deren Zusammenbau zum Beleuchtungsmodul ohne besonderen Zeitaufwand durchführbar ist.

Die Offenlegungsschrift US 20070147034 A1 betrifft eine Beleuchtungseinrichtung mit einer transparenten Platte, einer Lichtquelle sowie einem Befestigungselement. Das Befestigungselement dient zum Befestigen der LED-Lampen, der Steuerungsplatine sowie der transparenten Platte aneinander, wobei zunächst die Steuerplatine mit darauf montierten LED-Lampen in das Befestigungselement seitlich eingeführt wird, während die transparente Platte von der Oberseite des Befestigungselements eingeführt und darin mit Schrauben befestigt wird. Im zusammengesetzten Zustand der Beleuchtungseinrichtung liegen zwei im Querschnitt des Befestigungselements lateral beabstandete Schenkel an der transparenten Platte zum Halten derselben in dem im Querschnitt U-förmigen Befestigungselement an. Die Offenlegungsschrift US 20130021790 A1 betrifft eine Beleuchtungseinrichtung, die eine Mehrzahl von Beleuchtungseinheiten und eine Lichtbalkenstruktur sowie eine optische Platte umfasst. Die Lichtbalkenstruktur weist ein im Querschnitt senkrecht zur Längserstreckung U-förmiges Gehäuse auf, an deren Innenseitenflächen zwei etwa L-förmige Klemmkomponenten angeordnet sind. Diese begrenzen einen im Bereich der Basis des U-förmigen Gehäuses liegenden Raum zur Aufnahme der in Längsrichtung in Reihe angeordneten, einzelnen Lichteinheiten. Darüber hinaus begrenzen die beiden L-förmigen Klemmkomponenten einen, oberhalb von zwei sich nach innen erstreckenden Vorsprüngen beschränkten Raum zur Aufnahme der optischen Platte auf. Dabei liegt die optische Platte flächig sowohl an den freien Schenkeln der Klemmkomponenten als auch an Innenwandabschnitten des Gehäuses an. Die Offenlegungsschrift DE 102010062185 A1 betrifft eine langgestreckte, im Querschnitt senkrecht zur Längserstreckung etwa U-förmige Leuchtmittelhalterung mit einem schlitzartigen Innenraum. Dieser umfasst einen einseitig offenen Einsteckraum zur Aufnahme eines als Acrylglasscheibe ausgebildeten Optikelements und einen Aufnahmeraum zur Aufnahme eines LED-Leuchtbandes. Die Leuchtmittelhalterung weist beabstandet zur Basis der im Querschnitt U-förmigen Leuchtmittelhalterung zwei sich nach innen erstreckende Stege auf, durch welche in Einbaulage eine Abstützung der Acrylglasscheibe erfolgt. Die Acrylglasscheibe liegt dabei mit ihren beiden Hauptflächen flächig an den Innenflächen der Seitenwände der Leuchtmittelhalterung an. Jede der Seitenwände weist auf Höhe des Einsteckraumes drei Gewindelöcher auf durch welche jeweils eine Schraube eindrehbar ist zur Fixierung der Acrylglasscheibe. Ähnliche Beleuchtungseinrichtungen wie die der DE 102010062185 A1 sind in den Dokumenten WO2010095156 und EP 2101309 A1 offenbart.

Der vorliegenden Erfindung liegt die Aufgabe zugrunde, ein Beleuchtungsmodul anzugeben, bei welchem im zusammengesetzten Zustand eine besonders gute und beschädigungsfreie Fixierung von Optikelement zum Gehäusemodul vorliegt.

Diese Aufgabe löst die vorliegende Erfindung vorrichtungsseitig mit einem Beleuchtungsmodul mit den Merkmalen von Anspruch 1. Das erfindungsgemäße Beleuchtungsmodul weist ein langgestrecktes Gehäusemodul in Form eines U- oder V-Profils auf, das einen Rückenwandabschnitt und durch den Rückenwandabschnitt beabstandete Seitenwandabschnitte sowie einen zwischen den Seitenwandabschnitten gebildeten Offenlängsabschnitt umfasst, ein LED-Modul mit einem langgestreckten LED-Träger und einer Mehrzahl von auf dem LED-Träger elektrisch verschalteten und geometrisch längs auf dem LED-Träger angeordneten LEDs, wobei das LED-Modul direkt oder indirekt an der Innenseite des Rückenwandabschnitts des Gehäusemoduls anliegt, ein in den Offenlängsabschnitt eingeführtes Optikelement, das zumindest abschnittsweise vom Gehäusemodul aufgenommen und zwischen den Seitenabschnitten angeordnet ist, sowie ein, mit dem Optikelement mechanisch in Wirkverbindung stehenden Halteelement zum Halten des Optikelements im Gehäusemodul mit einer vorgegebenen relativen geometrischen Anordnung zum LED-Modul.

Dadurch, dass vergleichsweise wenige Teile zur Gestaltung des erfindungsgemäßen Beleuchtungsmoduls notwendig sind, erniedrigen sich die Herstellungskosten, darüber hinaus erniedrigt sich der Zeitaufwand für den Zusammenbau des erfindungsgemäßen Beleuchtungsmoduls. Durch die erfindungsgemäße Gestaltung des Beleuchtungsmoduls bzw. seiner Bauteile kann ferner sichergestellt werden, dass im zusammengesetzten Zustand eine vorgegebene relative geometrische Anordnung der Bauteile zueinander sicher einstellbar sind, insbesondere unabhängig von Bauteiletoleranzen, zur Optimierung des Lichteintritts in das Optikelement und damit zur Optimierung des von dem Beleuchtungsmodul abgegebenen Lichtstroms.

Die Angabe "langgestrecktes Gehäusemodul bzw. langgestreckter LED-Träger" meint hier Bauteile bzw. Bauelemente, deren Längserstreckung sehr viel größer als deren geometrische Erstreckung in ihrer Höhe bzw. der Breite, insbesondere mehr als fünf Mal so groß, ist.

Erfindungsgemäß ist vorgesehen, dass das Halteelement eine langgestreckte plattenförmige Gestalt aufweist, wobei das Halteelement im zusammengebauten Zustand des erfindungsgemäßen Beleuchtungsmoduls von einem der Seitenabschnitte des Gehäusemoduls abgestützt ist sowie eine Mehrzahl von elastisch auslenkbaren Elementen aufweist, die jeweils federnd an dem Optikelement anliegen zum Fixieren der relativen Lage von Optikelement zum Halteelement bzw. Gehäusemodul. Dabei kann vorgesehen sein, dass die Federelemente durch die Anlage am Optikelement dieses gegen eine Anlagefläche des Gehäusemoduls pressen zur relativen Fixierung des Optikelementes zum Gehäusemodul.

Weitere erfindungsgemäße Merkmale sind in der nachfolgenden allgemeinen Beschreibung, der Figurenbeschreibung, den Figuren sowie den Unteransprüchen angegeben.

Das Gehäusemodul kann zweckmäßigerweise als Stranggussprofil aus einem Metallmaterial hergestellt sein, um zum einen eine hohe Wärmeleitfähigkeit zur Abführung der Betriebswärme der LEDs bereitzustellen und gleichzeitig anwendungsspezifische Profile kostengünstig herzustellen. Es ist jedoch im Rahmen der Erfindung auch möglich, das Gehäusemodul aus einem wärmeleitfähigen Kunststoff herzustellen.

Als LED-Modul für das erfindungsgemäße Beleuchtungsmodul eignen sich insbesondere herkömmliche Gestaltungen, insofern kann der LED-Träger als Schaltungsplatte oder Platine ausgebildet sein, beispielsweise auch ein Keramikträger sein.

Zweckmäßigerweise kann das erfindungsgemäße Beleuchtungsmodul ein Optikelement aufweisen, das in Bezug auf seine Strahlformungs- und Lichtleiteigenschaften an die jeweilige Anwendung angepasst ist. Insbesondere kann das Optikelement als beispielsweise plattenförmig gestalteter Flächenstrahler ausgebildet sein. Ein Flächenstrahler kann sich dabei dadurch auszeichnen, dass zumindest eine seiner Stirnseiten als Lichteinkoppelfläche ausgebildet ist und beide oder nur eine der beiden Hauptflächen strukturiert sind, beispielsweise mittels einer Sandstrahlung, um im Optikelement insbesondere über Totalreflexion zwischen den beiden Hauptflächen geführtes Licht an vorgegebener Stelle, insbesondere im Bereich einer oder beider Hauptflächen, auszukoppeln. Ein für das erfindungsgemäße Beleuchtungsmodul verwendbares Optikelement ist jedoch nicht auf eine rein plattenförmige Gestaltung beschränkt. Insbesondere kann das Optikelement in Bezug auf eine oder beide Hauptflächen auch gekrümmt bzw. zumindest abschnittsweise gekrümmt sein oder sonstige optisch wirksame Gestaltungen oder Designgestaltungen aufweisen. Das optische Element kann ferner an der oder den Lichteinkoppelfläche(n) zur Optimierung der Einkopplung gekrümmt ausgebildet sein.

Zur Fixierung des Optikelements im Gehäusemodul kann das erfindungsgemäße Beleuchtungsmodul ein Halteelement aufweisen, welches das Optikelement relativ zum LED-Modul in einer vorgegebenen relativen Anordnung hält. Dabei kann auch vorgesehen sein, dass das Haltelement zumindest ein elastisch wirkendes Kraftelement aufweist, welches eine kraftbeaufschlagte Anlage des Optikmoduls zum Gehäusemodul und/oder zum LED-Modul verursacht.

Besonders zweckmäßig kann vorgesehen sein, dass das Halteelement in Bezug auf seine Gestaltung und Anordnung im oder am Gehäusemodul so realisiert ist, dass dessen Funktion werkzeuglos bereitgestellt werden kann.

Die Angabe "Halteelement" ist allgemein zu verstehen und kann in besonderen Ausführungsformen auch als integraler Bestandteil des Gehäusemoduls ausgebildet sein. In anderen Ausführungsformen kann wiederum vorgesehen sein, das Halteelement als getrenntes Bauteil vorzusehen, das mit dem Gehäusemodul durch Einführen in den Öffnungslängsabschnitt verbindbar ist. In weiteren Ausführungsformen kann vorgesehen sein, das Halteelement als getrenntes Bauteil vorzusehen, das durch Einführen in einen offenen Stirnseitenabschnitt des Gehäusemoduls mit diesem verbindbar ist.

Das erfindungsgemäße Beleuchtungsmodul eignet sich hervorragend für die Gestaltung von insbesondere langgestreckten Beleuchtungseinrichtungen. Hierfür können mehrere der erfindungsgemäßen Beleuchtungsmodule in Reihe angeordnet und stirnseitig gekoppelt werden, sodass das Erscheinungsbild einer länglichen Beleuchtungseinrichtung mit beliebiger Länge gestaltbar ist.

Vorzugsweise kann die geometrische Gestalt des bzw. der elastisch auslenkbaren Elemente so ausgeführt sein, dass sie ein Entfernen des Optikelements aus seiner Solllage, beispielsweise durch Rückziehen relativ zum Gehäusemodul, verhindern. Dies kann beispielsweise dadurch verursacht werden, dass die elastisch auslenkbaren Elemente im Bereich ihrer Anlage an dem Optikelement, beispielsweise durch die Gestaltung einer Spitze, in das Optikelement eindringen, sodass in der Solllage von Optikelement und Gehäusemodul ein Formschluss zwischen Optikelement und Halteelement eingerichtet ist.

Eine kostengünstige Herstellung des Halteelements für das erfindungsgemäße Beleuchtungsmodul kann dadurch bereitgestellt werden, in dem das Halteelement als Stanzblech ausgebildet ist mit einer Vielzahl von Teilausstanzungen, die aus der Blechebene herausgebogen sind und im zusammengesetzten Zustand der beschriebenen Bauteile des Beleuchtungsmoduls elastisch, d.h. kraftbeaufschlagt am Optikelement anliegen. "Teilausstanzung" meint hier einen aus dem Blech ausgestanzten Blechabschnitt, der zumindest eine freie Kante aufweist, jedoch noch mit dem Blech verbunden ist. Diese Teilausstanzungen können beispielsweise rechteckförmig oder auch dreieckig ausgebildet sein, wobei eine freie Seite der Teilausstanzung im zusammengesetzten Zustand am Optikelement anliegen kann. Zur Verbesserung der Haltekraft kann vorgesehen sein, dass diese freie Seite der Teilausstanzung eine Mehrzahl von Spitzen bzw. zumindest eine Spitze aufweist. Als besonders zweckmäßige Teilausstanzung hat sich eine dreieckförmige Teilausstanzung herausgestellt, bei welcher die freie Spitze im zusammengesetzten Zustand des Beleuchtungsmoduls am Optikelement federnd anliegt. In einer anderen Ausführungsform kann auch vorgesehen sein, dass das Halteelement für das erfindungsgemäße Beleuchtungsmodul aus einem Kunststoff, insbesondere einem glasfaserverstärkten Kunststoff hergestellt ist.

Zur Anordnung des Halteelements im Gehäusemodul kann vorgesehen sein, dass am freien Ende eines der Seitenabschnitte des Gehäusemoduls ein Hakenprofilabschnitt angeformt ist mit einer sich nach innen in Richtung zum Rückenwandabschnitt erstreckenden Hakennase. Der besagte Hakenprofilabschnitt weist den Vorteil auf, dass er einen Anschlag bzw. einen Führungsabschnitt für das Optikelement bei der Einführung in das Gehäusemodul und insofern eine Führung bereitstellen kann. Zweckmäßigerweise kann darüber hinaus vorgesehen sein, dass die Hakennase eine Hakenspitze aufweist, die im zusammengesetzten Zustand der Teile des erfindungsgemäßen Beleuchtungsmoduls am Halteelement zum Fixieren desselben im Gehäusemodul anliegt. Dabei kann beispielsweise vorgesehen sein, dass die Hakenspitze insbesondere an den Federelementen bzw. Teilausstanzungen anliegt.

Besonders zweckmäßig kann vorgesehen sein, dass der Hakenprofilabschnitt am freien Ende des einen der Seitenabschnitte des Gehäusemoduls derart gestaltet ist, dass dieser eine Nut bereitstellt zur Aufnahme eines Abschnittes des Halteelementes. Mit dieser Gestaltung ist eine vorgegebene Anordnung des Halteelementes innerhalb des Gehäusemoduls festgelegt.

Besonders vorteilhaft kann vorgesehen sein, dass an einem Seitenabschnitt des Gehäusemoduls eine Längsführung für das Halteelement vorgesehen ist zum Halten des Halteelementes an dem Seitenabschnitt und insbesondere zum stirnseitigen Einführen des Halteelements in das Profil des Gehäusemoduls.

Überaus vorteilhaft kann vorgesehen sein, dass der am freien Ende eines der Seitenabschnitte des Gehäuseprofils vorgesehene Hakenprofilabschnitt, der eine Nut zur Aufnahme eines Abschnittes des Halteelements bereitstellen kann, Teil einer solchen Längsführung für das Halteelement darstellt. Dies kann dadurch realisiert sein, dass von dem einen der Seitenwandabschnitte des Gehäusemoduls beabstandet von dessen freien Ende ein weiterer Hakenprofilabschnitt angeformt ist mit einer sich nach außen in Richtung zum freien Ende erstreckenden Hakennase. Dabei kann der weitere Hakenprofilabschnitt eine Nut bereitstellen zur Aufnahme eines weiteren Abschnittes des Halteelements, derartig, dass die Nuten beider Hakenprofilabschnitte und ein Bereich des einen Seitenabschnittes die besagte Längsführung für das Halteelement bereitstellen. Die beschriebene Gestaltungsmaßnahme stellt sicher, dass das Halteelement in vorgegebener Weise innerhalb des Gehäusemoduls und relativ zu diesem fixiert ist, sodass über das Halteelement ein vorgegebenes Anordnen bzw. Fixieren des Optikelementes zum Gehäusemodul über das Halteelement bereitgestellt ist. Darüber hinaus kann über die beiden insbesondere gegenüberliegend gestalteten Nuten die besagte Längsführung gestaltet sein, sodass das Halteelement für den Zusammenbau des Beleuchtungsmoduls auf einfache Weise seitlich in das Gehäusemodul eingeschoben werden kann, wobei eine Zwangsführung zwischen Halteelement und Gehäusemodul erfolgen kann.

Um in vorgegebener Weise eine Justage des Optikelements relativ zum Gehäusemodul bei der Einführung des Optikelements bereitzustellen, kann vorzugsweise vorgesehen sein, dass beide Seitenwandabschnitte des Gehäusemoduls an ihren freien Enden nach innen und sich aufeinander zu erstreckende Vorsprünge aufweisen, die den Offenlängsabschnitt in Querrichtung festlegen können. Einer dieser Vorsprünge kann an dem einen Seitenwandabschnitt als Teil des obenstehend beschrieben Hakenprofils ausgebildet sein. Die beschriebene Gestaltung kann insbesondere beim Zusammenbau des erfindungsgemäßen Beleuchtungsmoduls sicherstellen, dass das Optikelement in vorbestimmter Weise zum LED-Modul ausgerichtet ist, um insbesondere den Lichtübergang zwischen LED-Modul und Optikmodul zu optimieren.

Die Führung des Optikmoduls bei dessen Einführung in das Gehäusemodul kann weiter verbessert werden, wenn der weitere Vorsprung an seinem freien Ende eine Führungsfläche für das Optikmodul aufweist, sodass die an den freien Enden der Seitenwandabschnitte angeordneten Vorsprünge im Profil einen Führungskanal für das Optikelement bereitstellen. Zur weiteren Verbesserung kann auch vorgesehen sein, dass an dem anderen der beiden Seitenwandabschnitte beabstandet zu dessen Vorsprung am freien Ende ein weiterer, sich nach innen, d.h. in Richtung zum anderen Seitenwandabschnitt erstreckender Vorsprung angeformt ist, sodass dieser Vorsprung im weiteren Verlauf der Einführung des Optikelements in das Gehäusemodul eine Führung zur definierten Anordnung des Optikmoduls innerhalb des Gehäusemoduls erlaubt.

Um eine definierte relative geometrische Lage des Optikelementes zu den LEDs des LED-Moduls im zusammengesetzten Zustand des Moduls, insbesondere in Bezug auf eine lichteinkoppelnde Stirnseite des Optikelementes und der lichtemittierenden Flächen der LEDs, bereitzustellen, kann zumindest ein am LED-Träger befestigter oder angeformter Abstandshalter vorgesehen sein, der sich im montierten Zustand des LED-Moduls vom LED-Träger in Richtung zum Offenlängsabschnitt des Gehäusemoduls und über die LEDs hinaus erstreckt und somit mit seinem freien Ende als Anschlag für das Optikelement wirkt. Zweckmäßigerweise können mehrere derartige, zueinander beabstandete Abstandshalter am LED-Modul vorgesehen sein. Mit dieser Maßnahme kann auf konstruktiv einfache Weise eine vorgegebene, optimale Einkopplung des Lichtes in das Optikelement bereitgestellt werden unabhängig von etwaigen Bauteiletoleranzen, insbesondere von geometrischen Toleranzen des Gehäusemoduls, des Optikelementes und/oder des Halteelements.

Die der Erfindung zugrunde liegende Aufgabe wird darüber hinaus gelöst durch ein Verfahren zum Zusammensetzen eines Beleuchtungsmoduls, das insbesondere wie obenstehend beschrieben aufgebaut sein kann, wobei das erfindungsgemäße Verfahren die Schritte umfasst:
- Bereitstellen eines langestreckten Gehäusemoduls in Formeines U-oder V-Profils, aufweisend einen Rückenwandabschnitt und durch den Rückenwandabschnitt beabstandete Seitenwandabschnitte sowie einen zwischen den Seitenwandabschnitten gebildeten Offenlängsabschnitt;
- Bereitstellen eines LED-Moduls mit einem langgestreckten LED-Träger und einer Mehrzahl von auf dem LED-Träger elektrisch verschaltete und längs auf dem LED-Träger angeordnete LEDs;
- Bereitstellen eines langgestreckten Optikelements;
- Bereitstellen eines langgestreckten, plattenförmigen Halteelements;
- stirnseitliches Einführen des LED-Moduls in das Gehäusemodul, derart, dass die Rückseite des LED-Trägers zum Rückenwandabschnitt des Gehäusemoduls weist bzw. an diesem anliegt;
- stirnseitliches Einführen des Halteelementes in das Gehäusemodul;
- Einführen des Optikelementes in den Offenlängsabschnitt mit einer Relativbewegung von Optikelement und Gehäusemodul senkrecht zur Längserstreckung des Gehäusemoduls, insbesondere bis zur Anlage des Optikelementes an das LED-Modul, sodass das Optikelement zwischen Seitenabschnitten des Gehäusemoduls angeordnet ist, wobei durch das Halteelement das Optikelement im Gehäusemodul mit einer vorgegebenen relativen Anordnung am LED-Modul gehalten wird, und wobei das Halteelement von einem der Seitenabschnitte des Gehäusemoduls abgestützt wird, sowie eine Mehrzahl von elastisch auslenkbaren und in Längsrichtung beabstandeten Elementen des Haltelementes federnd an dem Optikelement anliegen zum Fixieren der relativen Lage von Optikelement zum Halteelement bzw. Gehäusemodul.

Wie obenstehend beschrieben, kann zweckmäßigerweise dabei vorgesehen sein, dass das Optikelement beim Einführvorgang über sich von Seitenwandabschnitten des Gehäusemoduls erstreckende Führungsprofilabschnitte geführt wird, sodass der Einführvorgang eine rein geradlinige relative Bewegung zwischen Gehäusemodul und Optikelement erfordert.

Die Erfindung wird nachfolgend durch das Beschreiben einiger Ausführungsformen unter Bezugnahme auf die beiliegenden Zeichnungen erläutert, wobei
- Figur 1: in einer perspektivischen Ansicht das Beleuchtungsmodul in einer Situation der Zusammensetzung der Einzelteile,
- Figur 2a: in einer Profilansicht gemäß Figur 1 ein erfindungsgemäß gestaltetes Beleuchtungsmodul in einer Situation des Zusammensetzens der Bauteile,
- Figur 2b: das erfindungsgemäß gestaltetes Beleuchtungsmodul gemäß Fig. 2a im vollständig zusammengesetzten Zustand, und
- Figuren 3a-c: beispielhafte Beleuchtungsanordnungen unter Verwendung eines oder mehreren erfindungsgemäßen Beleuchtungsmodule
zeigt.

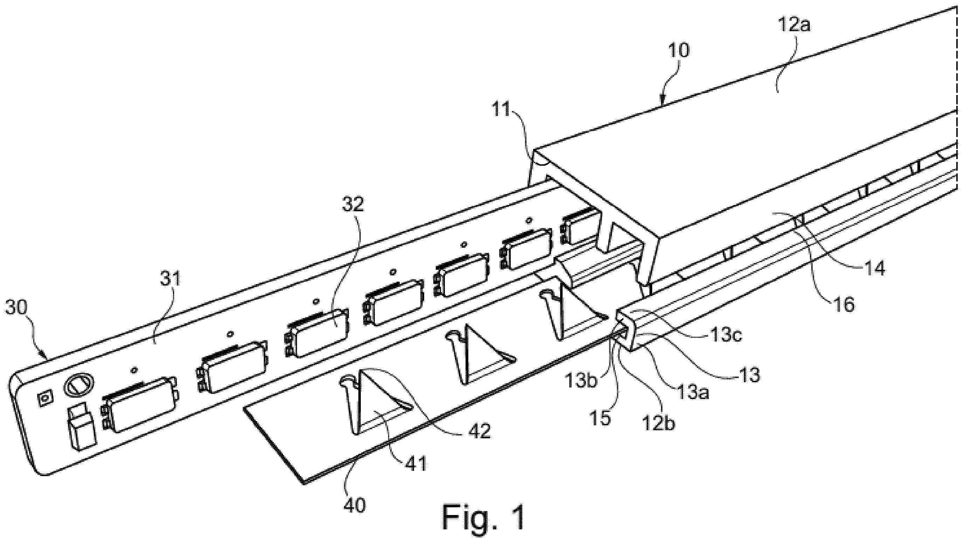

Figur 1 zeigt in einer perspektivischen Ansicht ein erfindungsgemäß ausgebildetes Beleuchtungsmodul, wobei die einzelnen Bauteile zur Klarheit der Darstellung in einer Zwischenposition angegeben sind während der Zusammensetzung des Moduls. Das Beleuchtungsmodul weist ein langgestrecktes Gehäusemodul 10 auf, welches in der beschriebenen Ausführungsform als U-Profil ausgebildet und mittels eines Strangpressverfahrens aus einem Metallwerkstoff hergestellt ist. Dieses U-Profil weist hier einen ebenen Rückenwandabschnitt 11 sowie zwei, jeweils sich in einem Winkel von 90° zum Rückenwandabschnitt erstreckenden Seitenwandabschnitte 12a, 12b auf. Ausgehend vom freien Ende des Seitenwandabschnittes 12a erstreckt sich senkrecht nach innen ein hier eben ausgebildeter Vorsprung bzw. Steg 14. Am freien Ende des gegenüberliegenden Seitenwandabschnittes 12b ist im Profil ein Hakenprofilabschnitt 13 angeformt mit einem sich in Richtung des Stegs 14 erstreckenden Abschnittes 13a sowie einer an diesen sich anschließende und in Richtung zum Rückenwandabschnitt 11 sich erstreckende Nase 13b, wodurch der Hakenprofilabschnitt 13 zusammen mit einem Bereich des Seitenwandabschnittes 12b eine Führungsnut 15 bildet. Ein dem Rückenwandabschnitt des Gehäusemoduls gegenüberliegender Offenlängsabschnitt 16, der hier als Schlitz ausgebildet ist, wird durch die stirnseitige Begrenzungsfläche des Steges 14 sowie die zum Steg 14 gerichtete Fläche 13c der Hakennase 13b festgelegt.

Wie aus Figur 1 ersichtlich, liegt die Rückseite des LED-Moduls 30 an der ebenen Innenfläche des Rückenwandabschnitts 11 an. Das LED-Modul 30 weist hier eine Keramikplatine 31 auf, auf der sowohl geometrisch als auch elektrisch in Reihe eine Mehrzahl von LEDs angeordnet ist, wobei die LED-Seite des Moduls 30 in Richtung zum Schlitz 16 im Gehäusemodul weist. Die notwendige Anschlusseinrichtung zum elektrischen Verbinden des LED-Moduls mit einer Versorgungseinrichtung ist in Figur 1 der Einfachheit halber nicht dargestellt.

Erkennbar weist das erfindungsgemäße Beleuchtungsmodul ferner eine langgestreckte Halteleiste 40 auf, die hier als Stanzblech ausgebildet ist, wobei in der beschriebenen Ausführungsform eine Mehrzahl von in Längsrichtung beabstandete Federkrallen 41 mittels einen Stanzvorgang ausgebildet sind und wobei diese Federkrallen aus der Ebene der plattenförmigen Halteleiste 40 herausgebogen sind, derartig, dass die Spitze des zweiseitig ausgestanzten Dreiecks in Richtung zum LED-Modul weist. Erkennbar greift die in der Figur untere Längskante der Halteleiste 40 in die Führungsnut 15 zum Führen der Halteleiste 40 relativ zum Gehäusemodul 10 ein. An der gegenüber liegenden Längskante ist eine ähnliche Gestaltung vorgesehen, worauf untenstehend näher eingegangen wird.

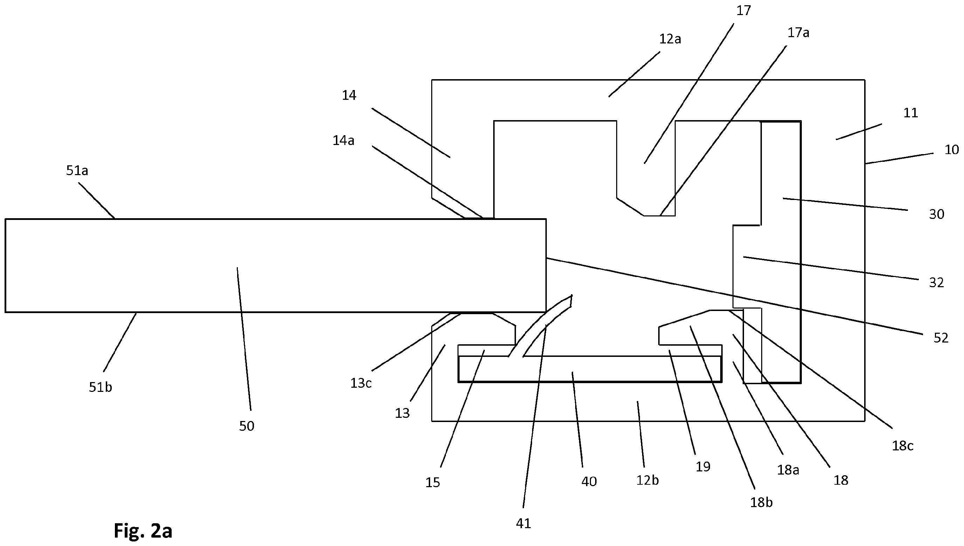

Figur 2a zeigt das Beleuchtungsmodul gemäß Figur 1 in einer Stirnseitenansicht in einer Situation, in welcher das Optikelement noch nicht vollständig in Richtung zum LED-Modul 30 in das Gehäusemodul eingeschoben ist. Erkennbar weist das Profil des Gehäusemoduls 10 neben einem grundsätzlichen U-Profil-gemäßen Aufbau weitere Profilabschnitte auf, die in der beschriebenen Ausführungsform zwischen den beiden Seitenabschnitten 12a, b gestaltet sind. Dies betrifft einen am freien Ende des einen Seitenabschnitts 12a sich nach innen in Richtung zum anderen Seitenabschnitt 12b erstreckenden Steg oder Vorsprung 14, der stirnseitig eine Führungsfläche 14a aufweist. Diese Führungsfläche 14a begrenzt zusammen mit der darauf gerichteten Führungsfläche 13c des Hakenprofilabschnitts 13 den Offenlängsabschnitt 16, siehe Figur 1, zur Aufnahme eines hier als Flächenstrahler 50 ausgebildeten Optikelements 50.

Zwischen dem Steg 14 bzw. Vorsprung und Rückenwandabschnitt 11 ist am Seitenwandabschnitt 12a ein weiterer Steg 17 bzw.

Vorsprung vorgesehen, welcher sich parallel zum Steg 14 erstreckt und an seinem freien Ende eine Führungsfläche oder Führungsfläche 17a bereitstellt.

Das U-Profil des Gehäusemoduls 10 weist in der beschriebenen Ausführungsform gegenüberliegend zum Steg 17 eine Längsführung für die Halteleiste 40 auf. Diese Längsführung ist gebildet durch den Hakenprofilabschnitt 13 zur Bereitstellung der Nut 15 sowie einen weiteren, an der Innenseite des Seitenabschnittes 12b angeordneten Hakenprofilabschnitt 18, welcher hier ähnlich zum Hakenprofilabschnitt 13 aufgebaut ist, wobei sich jedoch die Hakennase 18b in Richtung zum Hakenprofilabschnitt 13 hin erstreckt. Der Hakenprofilabschnitt 18 weist wiederum einen Hakengrund 18a sowie eine Hakennase 18b auf, wobei letztere an ihrer zum Seitenwandabschnitt 12a hin gerichteten Seite eine Führungsfläche 18c für das Optikelement bereitstellt. Der Hakenprofilabschnitt 18 bildet zusammen mit einem Bereich des Seitenabschnitts 12b eine Führungsnut 19, die mit der Führungsnut 15 des Hakenabschnitts 13 korrespondiert, sodass eine Längsführung gestaltet ist zum Führen und Halten der Halteleiste 40 am Seitenwandabschnitt 12b.

In der beschriebenen Ausführungsform liegt das LED-Modul 30 an der Innenseite des Rückenwandabschnitts 11 des Gehäusemoduls an. In einer nicht dargestellten Ausführungsform kann das Gehäusemodul auch eine Längsführung für das LED-Modul aufweisen, beispielsweise durch jeweils einen sich etwa senkrecht von beiden Seitenwandabschnitten 12a, b nach innen und zueinander laufende Steg, wobei diese Stege eine geringfügige Erstreckung haben können, um das LED-Modul etwa in Anlage zur Innenfläche des Rückenwandabschnitts 11 zu halten.

Die in Figur 2a dargestellte relative Anordnung von Einzelbauteilen des erfindungsgemäßen Beleuchtungsmoduls zeigt eine Situation, in welcher die Halteleiste 40 sowie das LED-Modul 30 in das Gehäusemodul 10 in ihrer jeweiligen Endlage eingebracht sind und dann der Flächenstrahler 50 senkrecht zur Längsachse des Gehäusemoduls über den Offenlängsabschnitt 16 in das Innere des Moduls 10 eingeschoben wird. Dabei sorgen die beschriebenen Führungsflächen 14a, 17a bzw. 13c dafür, dass bei der relativen Bewegung zwischen Gehäusemodul 10 und Flächenstrahler 50 senkrecht zur Längsachse des Gehäusemoduls eine Ausrichtung des Optikelements zum LED-Modul erfolgt. In der beschriebenen Ausführungsform erfolgt diese Relativbewegung bis die als Einkoppelfläche wirksame Stirnfläche 52 des Flächenstrahlers 50 an den LEDs 32 anliegt. Gleichzeitig erfolgt durch diese Anlage eine definierte Anlage der Rückseite des LED-Moduls 30 an die Innenfläche des Rückenwandabschnitts 11 zur Einstellung eines guten Wärmekontaktes und damit zum Abführen der Betriebswärme der LEDs auf das Gehäusemodul 10. Je nach Ausführungsform kann zwischen den Kontaktflächen des LED-Moduls und des Rückenwandabschnitts 11 eine Wärmeleitpaste vorgesehen sein, die auch eine Klebefunktion aufweisen kann.

In einer nichtdargestellten Ausführungsform kann auch vorgesehen sein, dass sich vom LED-Modul zumindest ein Abstandshalter in Richtung zum Optikelement 50 und über die Höhe der LEDs 32 hinaus erstreckt, sodass das Optikelement an dem bzw. den Abstandshalter anliegt und ein vorgegebener Abstand zwischen den LEDs und der Fläche 52 eingestellt ist. Dies könnte ausgehend von der in Figur 2a angegebenen Ausführungsform dadurch erreicht werden, dass die LEDs 32 eine geringere laterale Erstreckung als die in der Figur angegebene aufweisen.

Das erfindungsgemäße Beleuchtungsmodul kann in der beschriebenen Ausführungsform auf einfache Weise werkzeuglos zusammengesetzt werden. Dabei wird zunächst das LED-Modul 30 stirnseitig in das Gehäusemodul eingeschoben, sodass die Rückseite des LED-Trägers am Rückenwandabschnitt des Gehäusemoduls anliegt. In ähnlicher Weise wird das Halteelement stirnseitig in die durch die beiden Hakenprofilabschnitte 13, 18 sowie die Innenfläche des Seitenwandabschnitts 12b gebildete Längsführung eingeschoben. Als letzter Schritt erfolgt die Ausrichtung und Einführung des in der beschriebenen Ausführungsform plattenförmigen Flächenstrahlers 50 in den Offenlängsabschnitt 16, siehe Figur 1, wobei die Hauptflächen 51a, 51b des Flächenstrahlers über die Führungsflächen 13c, 14a, 17a und 18c zu den LEDs 32 ausgerichtet werden. Dabei erfolgt die relative Bewegung zwischen Flächenstrahler 50 und Gehäusemodul 10 senkrecht zur Längsachse des Gehäusemoduls so lange bis die Stirnfläche durch Kontakt mit einem am LED-Modul vorgesehenen Anschlag einen vorbestimmten Abstand zu den LEDs 32 aufweist oder, wie in der dargestellten Ausführungsform angegeben, berührt. Mit dem erfindungsgemäßen Beleuchtungsmodul kann insofern eine optimale relative und genau vorbestimmte geometrische Anordnung von Optikelement und LED-Modul bereitgestellt werden zur optimalen Einkopplung des Lichtes in den zunächst als Lichtleiter wirkenden Flächenstrahler. Dieser gibt das Licht in einem Abschnitt außerhalb des Gehäusemoduls dadurch ab, das in diesem Abschnitt eine oder beide Hauptflächen des Flächenstrahlers strukturiert sind, sodass dort die Totalreflexion aufgehoben ist und Licht austreten kann.

In einer anderen Ausführungsform kann auch vorgesehen sein, dass die Hauptflächen vollständig als Totalreflexionsflächen oder gar reflektierend beschichtet ausgebildet sind, sodass das Licht an der der Stirnfläche 52 gegenüberliegenden Stirnfläche des Optikelements ausgekoppelt wird.

Eine Wirkverbindung zwischen der Halteleiste 40 und dem Optikelement wird in der beschriebenen Ausführungsform durch die in Längsrichtung beabstandeten Federkrallen 41 bereitgestellt. Diese sind in ihrer Ruhestellung soweit aus der Leistenebene herausgebogen, dass beim Einschieben des Flächenstrahlers 50 diese elastisch in Richtung zur Leistenebene ausgelenkt werden und federnd beim weiteren Einführen des Flächenstrahlers in das Gehäusemodul an der unteren Hauptfläche 51b anliegen. In der beschriebenen Ausführungsform ist das als Halteleiste ausgebildete Halteelement so gestaltet, dass ein Zurückziehen des Optikelements aus dem Gehäusemodul verhindert wird. Dies wird dadurch erreicht, dass die Spitzen 42 der Federkrallen 41 sich in das Material des Flächenstrahlers eingraben, sodass eine sichere und definierte gegenseitige Anlage von Optikelement und LED-Modul sichergestellt ist.

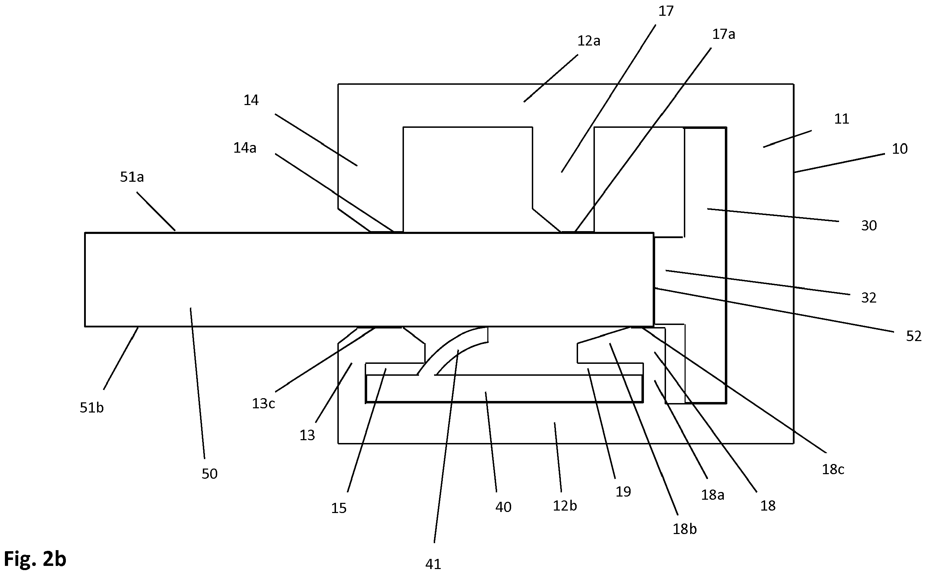

Figur 2b zeigt das erfindungsgemäß gestaltete Beleuchtungsmodul gemäß Fig. 2a im vollständig zusammengesetzten Zustand, bei welchem in der dargestellten Ausführungsform das Optikelement mit seiner Stirnfläche 52 an den LEDs 32 und die Hauptflächen 51a bzw. 51b an den Führungsflächen 14, 17a bzw. 13c, 18s anliegen.

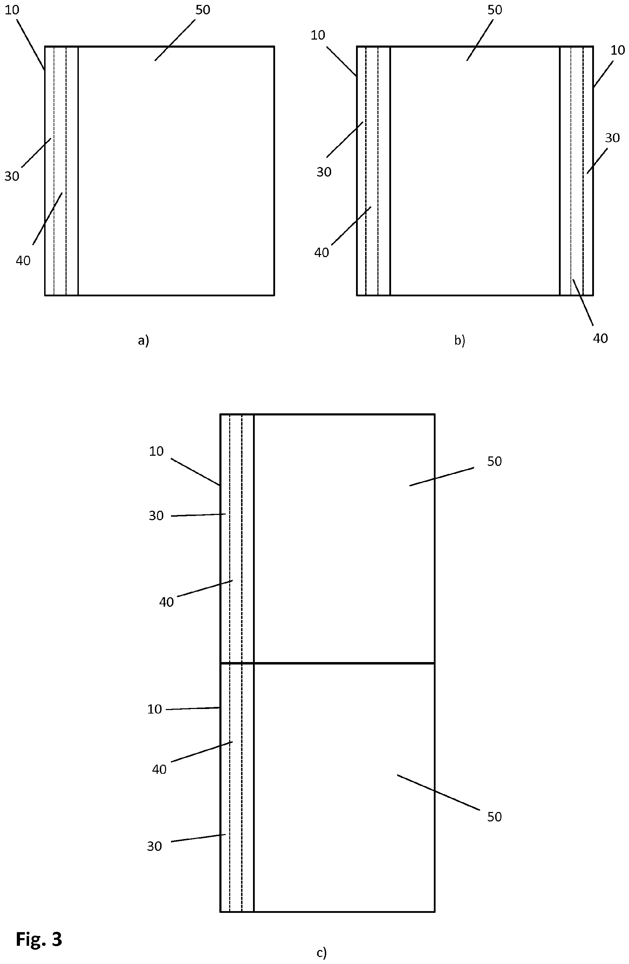

Die Figuren 3a - c zeigen beispielhafte Ausbildungen einer Beleuchtungsanordnung unter Verwendung des erfindungsgemäßen Beleuchtungsmoduls. Figur 3a zeigt eine Beleuchtungsanordnung, die durch ein einzelnes Beleuchtungsmodul gebildet ist. Figur 3b zeigt eine Beleuchtungsanordnung, die der der Figur 3a entspricht, wobei an einer weiteren Stirnseite ein Gehäusemodul 10 mit eingeschobenem LED-Modul 30 und Halteelement 40 auf den Flächenstrahler 50 in gleicher Weise wie obenstehend beschrieben aufgeschoben ist, sodass die Beleuchtungsanordnung der Figur 3b einen höheren Lichtstrom aufweist. Demgegenüber zeigt Figur 3c eine weitere Beleuchtungsanordnung, bei welcher zwei der Beleuchtungsanordnungen gemäß Figur 3a miteinander mechanisch gekoppelt sind.

### Bezugszeichenliste

- 1: Beleuchtungsmodul
- 10: Gehäusemodul
- 11: Rückenwandabschnitt
- 12a,b: Seitenwandabschnitt
- 13: Hakenprofilabschnitt
- 13a: Hakengrund
- 13b: Hakennase
- 13c: Führungsfläche
- 14: Vorsprung/Steg
- 14a: Führungsfläche
- 15: Führungsnut
- 16: Offenlängsabschnitt
- 17: Steg
- 17a: Führungsfläche
- 18: Hakenprofilabschnitt
- 18a: Hakengrund
- 18b: Hakennase
- 18c: Führungsfläche
- 19: Führungsnut
- 30: LED-Modul
- 31: LED-Träger, Keramikplatine
- 32: LED
- 40: Halteelement, Halteleiste
- 41: Federkralle
- 42: Spitze
- 50: Optikelement, Flächenstrahler
- 51a,b: Hauptfläche
- 52: Stirnfläche

## Patentansprüche

1. Beleuchtungsmodul mit
- einem langestreckten Gehäusemodul (10) in Form eines U-oder V-Profils aufweisend einen Rückenwandabschnitt und durch den Rückenwandabschnitt (11) beabstandete Seitenwandabschnitte (12a, b) sowie einen zwischen den Seitenwandabschnitten gebildeten Offenlängsabschnitt (16) ;
- einem LED-Modul (30) mit einem langgestreckten LED-Träger (31) und einer Mehrzahl von auf dem LED-Träger elektrisch verschaltete und längs auf dem LED-Träger angeordnete LEDs (32), wobei das LED-Modul (30) an der Innenseite des Rückenwandabschnitt (11) des Gehäusemoduls (90) anliegt,
- einem in den Offenlängsabschnitt (16) des Gehäusemoduls (10) eingeführtes Optikelement (50), dass zumindest abschnittsweise vom Gehäusemodul aufgenommen und zwischen den Seitenabschnitten (12a, b) angeordnet ist, sowie ein mit dem Optikelement (50) in Wirkverbindung stehendes Halteelement (40) zum Halten des Optikelementes (50) im Gehäusemodul (10) mit einer vorgegebenen relativen Anordnung zum LED-Modul (30), **dadurch gekennzeichnet, dass** das Halteelement (40) eine langgestreckte, plattenförmige Gestalt aufweist und von einem der Seitenabschnitte des Gehäusemoduls (10) abgestützt ist sowie eine Mehrzahl von elastisch auslenkbaren und in Längsrichtung beabstandeten Elementen aufweist, die jeweils federnd an dem Optikelement anliegen zum Fixieren der relativen Lage von Optikelement zum Halteelement bzw. Gehäusemodul.

2. Beleuchtungsmodul nach Anspruch 1, **dadurch gekennzeichnet, dass** das Halteelement (40) als Stanzblech ausgebildet ist mit einer Vielzahl von Ausstanzungen, die sich aus der Blechebene heraus erstrecken und gegen das Optikelement (50) drücken.

3. Beleuchtungsmodul nach Anspruch 1 oder 2, **dadurch gekennzeichnet, dass** am freien Ende eines der Seitenabschnitte (12b) des Gehäusemoduls (10) ein Hakenprofilabschnitt (13) angeformt ist mit einer sich nach innen in Richtung zum Rückenwandabschnitt (11) erstreckenden Hakennase (13b).

4. Beleuchtungsmodul nach Anspruch 3, **dadurch gekennzeichnet, dass** die Hakennase (13b) eine Hakenspitze aufweist, die am Halteelement (40) zum Fixieren desselben im Gehäusemodul (10) anliegt.

5. Beleuchtungsmodul nach einem der Ansprüche 3 oder 4, **dadurch gekennzeichnet, dass** der Hakenprofilabschnitt (13) eine Nut (15) bereitstellt zur Aufnahme eines Abschnittes des Halteelementes (40).

6. Beleuchtungsmodul nach einem der Ansprüche 1 bis 5, **dadurch gekennzeichnet, dass** an einem Seitenabschnitt (12b) des Gehäusemoduls (10) eine Längsführung für das Halteelement (40) vorgesehen ist zum Halten des Halteelements an dem Seitenabschnitt (12b).

7. Beleuchtungsmodul nach Anspruch 5 und 6, **dadurch gekennzeichnet, dass** an dem einen (12b) der Seitenabschnitte (12a, b) des Gehäusemoduls (10) beabstandet von dessen freiem Ende ein weiterer Hakenprofilabschnitt (18) angeformt ist mit einer sich nach außen in Richtung zum freien Ende erstreckenden Hakennase (18b), wobei der weitere Hakenprofilabschnitt eine Nut (19) bereitstellt zur Aufnahme eines Abschnittes des Halteelementes (40) und die Nuten (15, 19) beider Hakenprofilabschnitte (13, 18) und ein Bereich des einen Seitenabschnittes (12b) die Längsführung für das Halteelement (40) bereitstellen.

8. Beleuchtungsmodul nach einem der Ansprüche 1 bis 7, **dadurch gekennzeichnet, dass** beide Seitenwandabschnitte (12a, b) an ihren freien Enden nach innen und sich aufeinander zu erstreckende Vorsprünge aufweisen, die den Offenlängsabschnitt in Querrichtung festlegen.

9. Beleuchtungsmodul nach Anspruch 8, **dadurch gekennzeichnet, dass** an dem anderen der beiden Seitenabschnitte (12a) beabstandet zu dessen Vorsprung (14) am freiem Ende ein weiterer nach innen erstreckender Vorsprung (17) angeformt ist.

10. Beleuchtungsmodul nach Anspruch 9, **dadurch gekennzeichnet, dass** der weitere Vorsprung (17) an seinem freien Ende eine Führungsfläche (17a) für das Optikelement (50) aufweist.

11. Beleuchtungsmodul nach einem der Ansprüche 1 bis 10, **dadurch gekennzeichnet, dass** der LED-Träger (31) zumindest einen, im montierten Zustand des LED-Moduls (30) sich jeweils in Richtung zum Offenlängsabschnitt (16) des Gehäusemoduls und über die LEDs (32) hinaus erstreckenden Abstandshalter aufweist, der an einem freien Ende eine Anschlagsfläche für das Optikelement (50) bereitstellt.

12. Verfahren zum Zusammensetzen eines Beleuchtungsmoduls (1), insbesondere eines Beleuchtungsmodul nach einem der Ansprüche 1 bis 11, umfassend die Schritte:
- Bereitstellen eines langestreckten Gehäusemoduls (10) in Form eines U-oder V-Profils, aufweisend einen Rückenwandabschnitt und durch den Rückenwandabschnitt (11) beabstandete Seitenwandabschnitte (12a, b) sowie einen zwischen den Seitenwandabschnitten gebildeten Offenlängsabschnitt (16);
- Bereitstellen eines LED-Moduls (30) mit einem langgestreckten LED-Träger (31) und einer Mehrzahl von auf dem LED-Träger elektrisch verschaltete und längs auf dem LED-Träger angeordnete LEDs (32);
- Bereitstellen eines langgestreckten Optikelements (50) ;
- Bereitstellen eines langgestreckten, plattenförmigen Halteelements (40);
- stirnseitliches Einführen des LED-Moduls (30) in das Gehäusemodul (10), derart, dass die Rückseite des LED-Trägers (31) zum Rückenwandabschnitt (11) des Gehäusemoduls (10) weist;
- stirnseitliches Einführen des Halteelementes (40) in das Gehäusemoduls (10);
- Einführen des Optikelementes (50) in den Offenlängsabschnitt (16) mit einer Relativbewegung von Optikelement (50) und Gehäusemodul senkrecht zur Längserstreckung des Gehäusemoduls bis zur Anlage des Optikelementes (50) an das LED-Modul, sodass das Optikelement zwischen Seitenabschnitten des Gehäusemoduls angeordnet ist, wobei durch das Halteelement (40) das Optikelement im Gehäusemodul (10) mit einer vorgegebenen relativen Anordnung zum LED-Modul an dem LED-Modul gehalten wird, und wobei das Halteelement von einem der Seitenabschnitte des Gehäusemoduls abgestützt wird, sowie eine Mehrzahl von elastisch auslenkbaren und in Längsrichtung beabstandeten Elementen des Haltelementes federnd an dem Optikelement anliegen zum Fixieren der relativen Lage von Optikelement zum Halteelement bzw. Gehäusemodul.

13. Verfahren nach Anspruch 12, **dadurch gekennzeichnet, dass** das Optikelement (50) beim Einführvorgang über sich von Seitenabschnitten (12a, b) des Gehäusemoduls erstreckende Führungsprofilabschnitte (15, 19) geführt wird.

## Claims

1. Lighting module with
- an elongated housing module (10) as a U-shaped or V-shaped profile that has a rear wall portion and side wall portions (12a, b) spaced by the rear wall portion (11) as well as an open longitudinal portion (16) formed between the side wall portions;
- a LED-module (30) with an elongated LED support (31) and a multitude of LEDs (32) electrically connected on the LED support and placed lengthwise on the LED support, wherein the LED module (30) bears on the inner side of the rear wall portion (11) of the housing module (10);
- an optical element (50), inserted into the open longitudinal portion (16) of the housing module (10), that is received at least partially by the housing module and that is placed between the side portions (12a, b), as well as a support element (40) operatively connected with the optical element (50) for supporting the optical element (50) in the housing module (10) with a predetermined relative positioning to the LED module (30), **characterized in that** the support element (40) has an elongated plate-shaped configuration and is supported by one of the side portions of the housing module (10) as well as a multitude of resiliently deflectable elements that are spaced in the longitudinal direction that respectively bear resiliently on the optical element for fixing the relative position of the optical element to the support element or to the housing module.

2. Lighting module according to claim 1, **characterized in that** the support element (40) is configured as stamped sheet metal with a multitude of cut-outs that extend from the sheet metal plane and press against the optical element (50).

3. Lighting module according to claim 1 or 2, **characterized in that** a hook profile portion (13) is molded at the free end of one of the side portions (12b) of the housing module (10) with a hook nose that extends inwards in direction of the rear wall portion (11).

4. Lighting module according to claim 3, **characterized in that** the hook nose (13b) has a hook tip that bears on the support element (40) for the fixing thereof in the housing module (10).

5. Lighting module according to one of the claims 3 or 4, **characterized in that** the hook profile portion (13) makes available a groove (15) for receiving a portion of the support element (40).

6. Lighting module according to one of the claims 1 to 5, **characterized in that** a longitudinal guide for the support element (40) is provided on one side portion (12b) of the housing module (10) for supporting the support element on the side portion (12b).

7. Lighting module according to claim 5 and 6, **characterized in that** a further hook profile portion (18) is molded on one (12b) of the side portions (12a, b) at a distance of the free end thereof with a hook nose (18b) that extends outwards in direction of the free end, wherein the further hook profile portion makes available a groove (19) for receiving a portion of the support element (40) and the grooves (15, 19) of both hook profile portions (13, 18) and a section of the one side portion (12b) make available the longitudinal guide for the support element (40).

8. Lighting module according to one of the claims 1 to 7, **characterized in that** both side wall portions (12a, b) have at their free ends projections that extend inwards and towards each other that fix the open longitudinal portion in the transverse direction.

9. Lighting module according to claim 8, **characterized in that** a further inwards extending projection (17) is molded at the free end on the other of the two side portions (12a) at a distance of its projection (14).

10. Lighting module according to claim 9, **characterized in that** the further projection (17) has a guiding surface (17a) at its free end for the optical element (50).

11. Lighting module according to one of the claims 1 to 10, **characterized in that** the LED support (31) has at least one spacer that, the LED module (30) being mounted, respectively extends in direction of the open longitudinal portion (16) of the housing module and beyond the LEDs (32), spacer that makes available an abutment surface for the optical element (50) at one free end.

12. Method for assembling a lighting module (1), in particular a lighting module according to one of the claims 1 to 11, comprising the steps:
- making available of an elongated housing module (10) as a U-shaped or V-shaped profile that has a rear wall portion and side wall portions (12a, b) spaced by the rear wall portion (11) as well as an open longitudinal portion (16) formed between the side wall portions;
- making available of a LED module (30) with an elongated LED support (31) and a multitude of LEDs (32) electrically connected on the LED support and placed lengthwise on the LED support;
- making available of an elongated optical element (50);
- making available of an elongated plate-shaped support element (40);
- front-sided insertion of the LED module (30) into the housing module (10) in such a way that the rear side of the LED support (31) is turned to the rear wall portion (11) of the housing module (10);
- front-sided insertion of the support element (40) into the housing module (10);
- insertion of the optical element (50) into the open longitudinal portion (16) with a relative movement of the optical element (50) and the housing module perpendicularly to the longitudinal extension of the housing module until the optical element (50) bears on the LED module so that the optical element is placed between side portions of the housing module, wherein the optical element is supported on the LED module by the support element (40) in the housing module (10) with a predetermined relative arrangement to the LED module and wherein the support element is braced by one of the side portions of the housing module, as well as a multitude of resiliently deflectable elements of the support element that are spaced in the longitudinal direction bear on the optical element for fixing the relative position of the optical element to the support element or to the housing module.

13. Method according to claim 12, **characterized in that** the optical element (50) is guided during the insertion procedure by guiding profile portions (15, 19) that extend from side portions (12a, b) of the housing module.

## Revendications

1. Module d'éclairage avec
- un module de boîtier de forme allongée (10) en forme de profil en U ou en V qui présente une portion de paroi arrière et des portions de parois latérales (12a, b) espacées de la portion de paroi arrière (11) ainsi qu'une portion longitudinale ouverte (16) formée entre les portions de parois latérales ;
- un module LED (30) avec un support de LED de forme allongée (31) et une multitude de LED (32) connectées électriquement sur le support de LED et placées dans le sens longitudinal sur le support de LED, le module LED (30) reposant sur le côté intérieur de la portion de paroi arrière (11) du module de boîtier (10),
- un élément optique (50) introduit dans la portion longitudinale ouverte (16) du module de boîtier (10), qui est logé au moins partiellement par le module de boîtier et qui est placé entre les portions latérales (12a, b) ainsi qu'un élément de support (40) qui est en liaison active avec l'élément optique (50) pour supporter l'élément optique (50) dans le module de boîtier (10) avec un positionnement relatif prédéfini par rapport au module LED (30),
**caractérisé en ce que** l'élément de support (40) présente une configuration allongée en forme de plaque et est supporté par l'une des portions latérales du module de boîtier (10) ainsi qu'une multitude d'éléments déviables élastiquement et espacés dans le sens longitudinal qui reposent élastiquement chacun sur l'élément optique pour fixer la position relative de l'élément optique par rapport à l'élément de support ou au module de boîtier.

2. Module d'éclairage selon la revendication 1, **caractérisé en ce que** l'élément de support (40) est configurée comme une tôle découpée avec une multitude de découpes qui s'étendent en sortant du plan de la tôle et qui appuient contre l'élément optique (50).

3. Module d'éclairage selon la revendication 1 ou 2, **caractérisé en ce qu'**une portion de profilé à crochet (13) est moulée à l'extrémité libre d'une des portions latérales (12b) avec un ergot de crochet (13b) qui s'étend vers l'intérieur en direction de la portion de paroi arrière (11).

4. Module d'éclairage selon la revendication 3, **caractérisé en ce que** l'ergot de crochet (13b) présente une pointe de crochet qui repose sur l'élément de support (40) pour fixer celui-ci dans le module de boîtier (10).

5. Module d'éclairage selon l'une des revendications 3 ou 4, **caractérisé en ce que** la portion de profilé à crochet (13) met à disposition une rainure (15) pour loger une portion de l'élément de support (40).

6. Module d'éclairage selon l'une des revendications 1 à 5, **caractérisé en ce qu'**il est prévu un guidage longitudinal pour l'élément de support (40) sur une portion latérale (12b) du module de boîtier (10) pour supporter l'élément de support contre la portion latérale (12b).

7. Module d'éclairage selon la revendication 5 ou 6, **caractérisé en ce qu'**une autre portion de profilé à crochet (18) est moulée sur l'une (12b) des portions latérales (12a, 12b) du module de boîtier (10) en étant espacée de son extrémité libre avec un ergot de crochet (18b) qui s'étend vers l'extérieur en direction de l'extrémité libre, cependant que l'autre portion de profilé à crochet met à disposition une rainure (19) pour loger une portion de l'élément de support (40), et les rainures (15, 19) des deux portions de profilé à crochet (13, 18) et une zone de l'une des portions latérales (12b) mettent à disposition le guidage longitudinal pour l'élément de support (40).

8. Module d'éclairage selon l'une des revendications 1 à 7, **caractérisé en ce que** les deux portions de parois latérales (12a, b) présentent, à leurs extrémités libres, des saillies qui s'étendent vers l'intérieur et l'une vers l'autre qui fixent la section longitudinale d'ouverture dans le sens transversal.

9. Module d'éclairage selon la revendication 8, **caractérisé en ce qu'**une autre saillie (17) qui s'étend vers l'intérieur est moulée à l'extrémité libre sur l'autre des deux portions latérales (12a) en étant espacée de la saillie (14) de celle-ci.

10. Module d'éclairage selon la revendication 9, **caractérisé en ce que** l'autre saillie (17) présente, à son extrémité libre, une surface de guidage (17a) pour l'élément optique (50).

11. Module d'éclairage selon l'une des revendications 1 à 10, **caractérisé en ce que** le support de LED (31) présente au moins un espaceur qui, lorsque le module LED (30) est à l'état monté, s'étend en direction de la portion longitudinale ouverte (16) du module de boîtier et au-delà des LED (32), espaceur qui met à disposition une surface de butée pour l'élément optique (50) à une extrémité libre.

12. Procédé pour assembler un module d'éclairage (1), en particulier un module d'éclairage selon l'une des revendications 1 à 11, comprenant les étapes :
- mise à disposition d'un module de boîtier de forme allongée (10) en forme de profil en U ou en V qui présente une portion de paroi arrière et des portions de parois latérales (12a, b) espacées de la portion de paroi arrière (11) ainsi qu'une portion longitudinale ouverte (16) formée entre les portions de parois latérales ;
- mise à disposition d'un module LED (30) avec un support de LED de forme allongée (31) et une multitude de LED (32) connectées électriquement sur le support de LED et placées dans le sens longitudinal sur le support de LED ;
- mise à disposition d'un élément optique de forme allongée (50) ;
- mise à disposition d'un élément de support de forme allongée en forme de plaque (40) ;
- introduction sur la face frontale du module LED (30) dans le module de boîtier (10) de telle manière que l'arrière du support de LED (31) est tourné vers la portion de paroi arrière (11) du module de boîtier (10) ;
- introduction sur la face frontale de l'élément de support (40) dans le module de boîtier (10) ;
- introduction de l'élément optique (50) dans la portion longitudinale ouverte (16) avec un mouvement relatif de l'élément optique (50) et du module de boîtier perpendiculairement à l'extension longitudinale du module de boîtier jusqu'à l'appui de l'élément optique (50) sur le module LED si bien que l'élément optique est placé entre les portions latérales du module de boîtier, cependant que l'élément optique est maintenu contre le module LED dans le module de boîtier (10) par l'élément de support (40) avec un positionnement relatif prédéfini par rapport au module LED et cependant que l'élément de support est soutenu par l'une des portions latérales du module de boîtier, ainsi qu'une multitude d'éléments de l'élément de support déviables élastiquement et espacés dans le sens longitudinal reposent élastiquement contre l'élément optique pour fixer la position relative de l'élément optique par rapport à l'élément de support ou au module de boîtier.

13. Procédé selon la revendication 12, **caractérisé en ce que** l'élément optique (50) est guidé, lors de l'opération d'introduction, par des portions de profilé de guidage (15, 19) qui s'étendent à partir des portions latérales (12a, b) du module de boitier.
